# EUROPÄISCHE PATENTANMELDUNG

(11) **EP 0 855 137 A2**
(43) Veröffentlichungstag der Anmeldung: **29.07.1998**
(21) Anmeldenummer: 98100903.8
(22) Anmeldetag: 20.01.1998
(51) Int. Cl.: A01K 31/16, A01K 11/00

(54) **Verfahren und Vorrichtung zum Individualisieren eines Eies hinsichtlich seiner Legehenne**

(30) Priorität: 23.01.1997 NL 1005065
(71) Anmelder: Jansen Machinefabriek & Konstruktiebedrijf B.V., 3771 NC Barneveld (NL); Diehl Ident GmbH, 90478 Nürnberg (DE); Hotraco B.V., 5983 AC Horst (NL)
(72) Erfinder: Jansen, Albrecht Hendrik, 3771 MC Barneveld (NL); Beelen, Christiaan Wilhelm Marie, 5964 NS Meterik (NL); Ruppert, Helmut, 47906 Kempen (NL)
(74) Vertreter: Hofmann, Gerhard, Dipl.-Ing. Patentassessor

(57) **Zusammenfassung**

Um einem Ei (16) die Identität seiner Legehenne (1) und weitere individuelle Daten zuordnen zu können, wird ein Legenest (3) verschlossen, sobald es von einer Henne (1) betreten wurde. Der in ihrer Flügelmarke oder in ihrem Fußring angeordnete Transponder (2) wird von einer im oder am Nest (3) installierten Antenne (4) ausgelesen, und diese Identitätsinformation wird an einen zentralen Rechner (7) übermittelt, sobald die Henne (1) ein Ei (16) ins Nest (3) gelegt hat, das dann rückwärtig aus dem Nest (3) herausrollt. Darauf spricht ein Detektor (26) an, der dann rechnergesteuert einerseits den gezielten Transport des Eies (16) unter einen Drucker (9) und andererseits die Wieder-Öffnung des Nestes (3) zum Herausschieben der Legehenne (1) bewirkt.

## Beschreibung

Die Erfindung betrifft ein Verfahren gemäß dem Oberbegriff des Anspruches 1 und einer Vorrichtung gemäß dem Oberbegriff des Anspruches 2.

In der Geflügelhybridzucht wie insbesondere in der Hühnerzucht besteht für eine Interpretation und Nachverfolgung von Zuchtergebnissen ein großes Interesse daran, ein bestimmtes auszubrütendes Ei einer bestimmten Legehenne und u.U. weiteren für den Zuchtverlauf interessanten Informationen eindeutig zuordnen zu können. Das ist besonders problematisch und personell aufwendig bei der aus Tierschutzgründen zu bevorzugenden Aufzucht in Bodenhaltung. Dafür wird dort eine sogenannte Nestfalle (Trapnest) eingesetzt, bei der sich eine Zugangsklappe schließt, wenn eine Henne das Legenest betreten hat. Das Nest, das von außen einsehbar ist, muß in kurzen Abständen inspiziert werden, uni ein frisch gelegtes Ei so bald wie möglich zur Überführung in eine atmosphärisch definierte Brutumgebung manuell entnehmen und dabei sogleich per Hand Kenndaten darauf vermerken zu können, die an Ort und Stelle von einer Flügelmarke oder einen, Fußring der dafür einzufangenden Henne abgelesen werden. Diese Daten werden später vom Ei in Tabellen übertragen, in denen sie um weitere spezifische Informationen etwa über die aktuellen Zuchtumstände ergänzt werden können. Das alles ist aber sehr zeit- und personalaufwendig sowie fehlerträchtig. Außerdem ist zu befürchten, daß es durch das jeweilige Einfangen gleich nach dem Legen des Eies gerade bei hochwertigen Tieren zu Verhaltensstörungen bis hin zu Legehemmungen kommt. Aber für die kontinuierliche Verbesserung der Ergebnisse bei der Rassezucht von Geflügel ist es sehr wichtig, die Zuchterfolge über Generationen zurückverfolgen zu können, also insbesondere festzuhalten, welche Legehenne wann ein bestimmtes Ei gelegt hat, das zur Aufzucht zur einer bestimmten Folgegeneration eingesetzt wurde.

In Erkenntnis dieser Gegebenheiten liegt vorliegender Erfindung die Aufgabe zugrunde, ein Verfahren und eine Vorrichtung anzugeben, bei denen die Zuordnung zwischen Ei und Legehenne weniger arbeitsintensiv und fehlerträchtig ist und die eine einfache Ergänzung der erwähnten Stammdaten um weitere Zuchtinformationen eröffnen.

Diese Aufgabe ist gemäß den Merkmalen des Anspruches 1 bzw. des Anspruches 2 gelöst. Um einem Ei die Identität seiner Legehenne und weitere individuelle Daten zuordnen zu können, wird danach ein Legenest verschlossen, sobald es von einer Henne betreten wurde. Ein in ihrer Flügelmarke oder in ihrem Fußring angeordneter Transponder wird von einer im oder am Nest installierten Antenne ausgelesen, und diese Identitätsinformation wird an einen zentralen Rechner übermittelt, sobald eine Henne ein Ei ins Nest gelegt hat, das dann rückwärtig aus dem Nest herausrollt. Darauf spricht ein Detektor an, der dann rechnergesteuert einerseits den gezielten Transport des Eies unter einen Drucker und andererseits ein Wieder-Öffnen des Nestes zum Herausschieben der Henne bewirkt.

Nach der erfindungsgemäßen Lösung sind also gar keine manuellen Eingriffe bei der Identifikation des Eies mehr erforderlich, weil das abgelegte Ei selbst bewirkt, daß es mit der Identinformation der Legehenne versehen und das wieder geöffnete Legenest geräumt wird. Dafür wird das Gelege von einem Sensor erfaßt, der ein mechanisch unterstütztes Räumen des wieder geöffneten Käfigs einleitet, während das Ei, noch ehe es von der Henne bebrütet werden kann, aus dem Nest herausfällt und mittels eines Transportmittels automatisch zu einer Markierstation überführt wird, wo die zuvor im Nest aus einem Ident-Transponder der Legehenne ausgelesene Identinformation zu dessen individueller Legehennen-Zuordnung auf das Ei gedruckt wird. Dadurch erübrigt sich jede personelle Überwachung und manuelle Kennzeichnung des Eies.

Ein Transportband zum Überführen des Eies vom Legenest zur Markierstation, etwa einem Tintenstrahl-Drucker, ist zweckmäßigerweise nach Art von Obst-Sortiermaschinen mit aufeinanderfolgenden, also voneinander getrennten Mulden zur Aufnahme jeweils eines Eies ausgestattet. Zweckmäßigerweise verläuft das Transportband längs einer Reihe nebeneinander installierter solcher Legenester; und die Aufnahmemulden weisen untereinander den Abstand dieser Nester auf wenn nicht im Taktschrittverfahren bestimmte Mulden vorübergehend gezielt unter bestimmte Nester verfahren werden. Auf jeden Fall wird das aus einem bestimmten Nest stammende Ei in einer momentan diesem Nest zugeordneten Mulde, also definiert zur Markierstation überführt, wo die vom Huhn abgefragte und bis dahin zwischengespeicherte Identinformation - sowie erforderlichenfalls außerdem eine von einer Datenbank abgerufene Zusatzinformationen - auf das Ei gestempelt wird.

Für die Identifizierung der Legehenne ist diese mit einer Transponder-Flügelmarke etwa gemäß DE 196 44 328 A1 oder mit einem Transponder-Fußring etwa gemäß DE 296 10 656 U1 ausgestattet. Die Transponder-Identinformation wird von einer am oder im Legenest angeordnete Antenne abgefragt und an einen zentralen Rechner für die Steuerung des Druckers und für eine Zuordnung von aus einer Datenbank abzurufenden Zusatzinformationen übermittelt.

Hinsichtlich zusätzlicher Weiterbildungen und weiterer Vorteile wird auf die weiteren Ansprüche und auf nachstehende Beschreibung eines bevorzugten Ausführungsbeispieles für eine erfindungsgemäße Vorrichtung zum Ausüben des erfindungsgemäßen Verfahrens Bezug genommen. In der Zeichnung zeigt auf das Prinzipielle vereinfacht :
- Fig. 1: in schematisch-fünktionaler Darstellung eine Vorrichtung zum Ausüben des Verfahrens nach der Erfindung
- Fig. 2: in Querschnittsdarstellung das Legenest gemäß Fig. 1 nach Betreten durch eine Legehenne,
- Fig. 3: in Querschnittsdarstellung gemäß Fig. 2 die Situation, nachdem die Legehenne ein Ei gelegt hat,
- Fig. 4: den Zustand nach dem Öffnen des Legenestes gemäß Fig. 2 oder Fig.3,
- Fig. 5: das Legenest gemäß Fig. 2 bis Fig. 4 im Querschnitt, nun beim Austreiben der Henne aus dem Legenest, und
- Fig. 6: ein von mehreren nebeneinander installierten Legenestern zur Markierstation führendes Transportband in Seitenansicht.

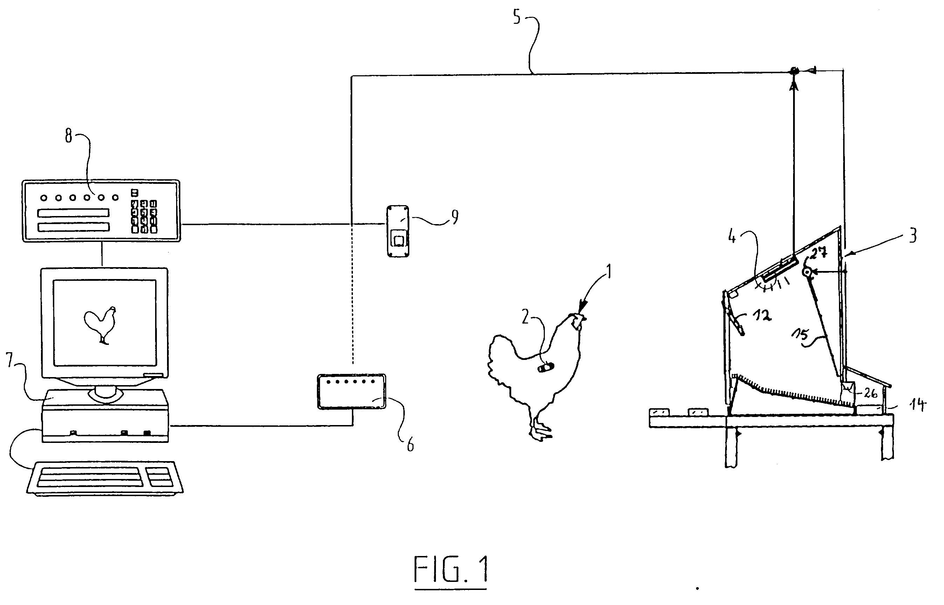

Die fünktionale Prinzipdarstellung der Fig. 1 zeigt eine Legehenne 1, die an einem Flügel mit einem Ident-Transponder 2 ausgestattet ist. Das Legenest 3 ist mit einer Antenne 4 ausgerüstet. Wenn die Henne 1 das Nest 3 betritt, nimmt die Antenne 4 vom Transponder 2 eine Identitäts-Information auf. So ist die Henne 1, die gerade in diesem Nest 3 weilt, eindeutig identifiziert.

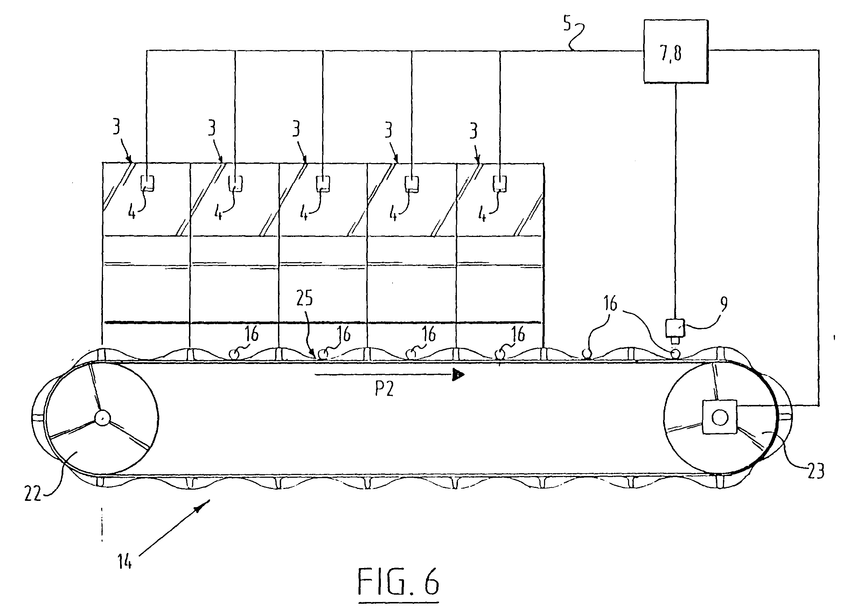

Der Transport des Eies 16 von seinem Legenest 3 zu dem Drucker 9 ist in Fig. 6 symbolisch vereinfacht veranschaulicht. Die mittels der Antenne 4 im Legenest 3 vom passiven, also ohne eigene Energiequelle arbeitenden Transponder 2 abgefragte Identinformation wird drahtlos oder über eine Leitung 5 - gegebenenfalls über ein Modem 6 - an einen zentralen Rechner 7 übermittelt. Dieser Rechner 7 hat Zugang zu einer Datenbank mit Informationen, die in Verbindung mit der von der Antenne 4 aus dem Transponder 2 abgerufenen Identinformation auf das von der Henne 1 gelegte Ei 16 gedruckt werden sollen. Dafür werden die vom Rechner 7 kombinierten Daten zu einem Prozeßrechner 8 übermittelt, uni über diesen einen Drucker 9 anzusteuern, damit er den aktuellen Datensatz auf das Ei 16 druckt. Der Zentral-Rechner 7 kann außerdem dafür programmiert sein, die aktuelle Identinformation und die aktuell aus der Datenbank für die Bedruckung abgerufenen Zusatzinformationen schlicht oder in bildlicher Aufbereitung auf einem Bildschirm darzustellen, wie in Fig. 1 berücksichtigt.

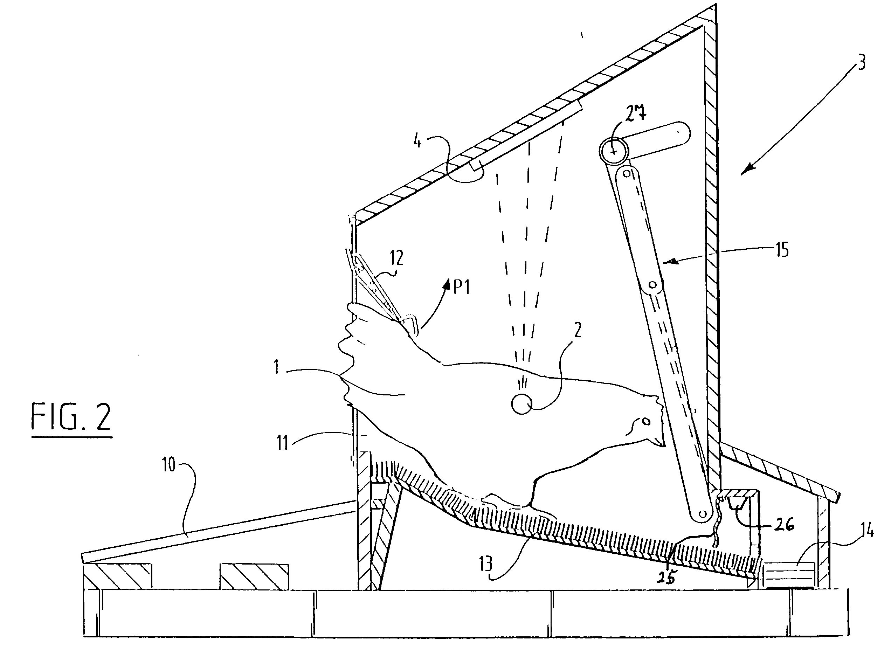

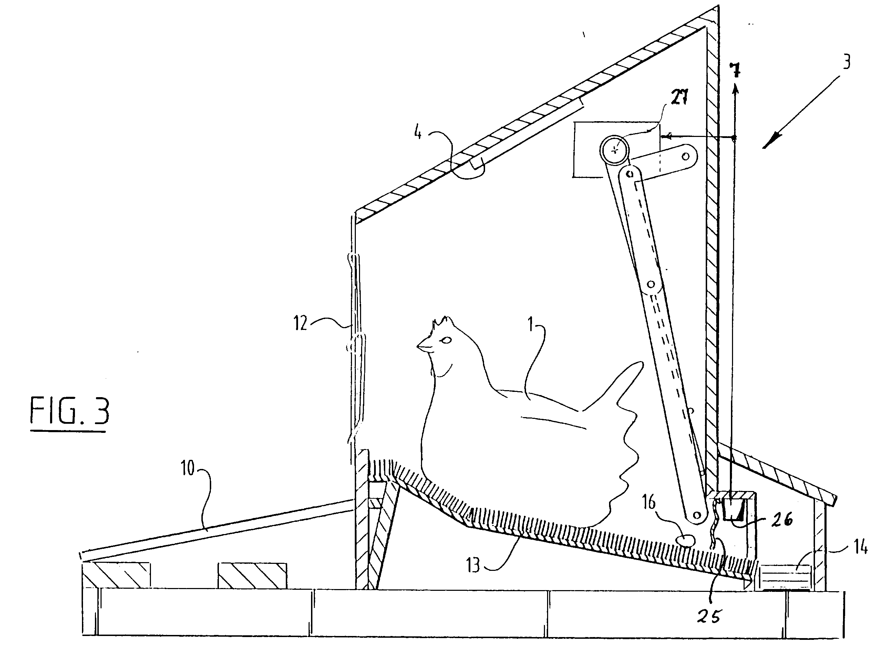

In Fig. 2 ist der Moment dargestellt, da eine legewillige Henne 1 ein Legenest 3 betreten hat. Aus dem dadurch in den Abfragebereich der Antenne 4 gelangten Flügel-Transponder 2 wird die Identinformation dieser Henne 1 ausgelesen. Zum einfachen Betreten des Nestes 3 ist an dessen Vorderseite ein Gitterkasten 10 installiert. Beim Betreten des Nestes 3 drückt die Henne 1 mit ihrem Stert (unmittelbar, oder mittelbar über einen Hebelmechanismus) etwa in Pfeilrichtung P1 etwas gegen ein in geöffneter Stellung oberhalb des Eintrittsbereiches arretiertes Verschlußelement 12 in Form etwa einer Fallklappe oder eines Fallgitters, was ausreicht, um die Arretierung zu lösen. Das Verschlußelement 12 fährt oder schwenkt deshalb selbsttätig abwärts und verschließt gemäß Fig.3 den Zugang zum Nest 3, so daß nun nur eine Henne 1 darin ist und keine weitere hinzukommen kann.

Hinter dem, gegenüber der Horizontalen deutlich geneigten, Boden 13 des Nestes 3 schließt sich eine Ausgabeöffnung zu einem gedeckten Gang mit einem Transportband 14 an. Ein Vorhang 25 vor der Ausgabeöffnung schützt die legewillige Henne 1 etwas gegen Zugluft. Ein im Bereiche der Ausgabeöffnung installierter Detektor 26 erfaßt etwa mittels eines Berührungssensors oder mittels eines kapazitiven Annäherungs- oder Bewegungssensors die schwerkraftbedingte Passage des frisch gelegten Eies 16 zum Transportband 14 hin und übermittelt eine entsprechende Meldung an den Rechner 7 (vgl. Fig. 1). Außerdem wird nun ein Austreibsystem 15 aktiviert, das über dem Boden 13 im Nest 3 installiert und dessen Funktion unten erläutert ist.

Das Huhn 1 hat in der Fig. 3 dargestellten Situation gerade ein Ei 16 gelegt. Das rollt aufgrund der Neigung des Nestbodens 13 vom Eingangsbereich des Nestes 3 fort nach rückwärts durch eine Öffnung hindurch auf das dahinter gelegene Transportband 14. Dadurch spricht der Detektor 26 an und startet außerdem einen Schwenkmotor 27, der in oder an dem Nest 3 zu behutsamer Betätigung des Austreibsystemes 15 installiert ist.

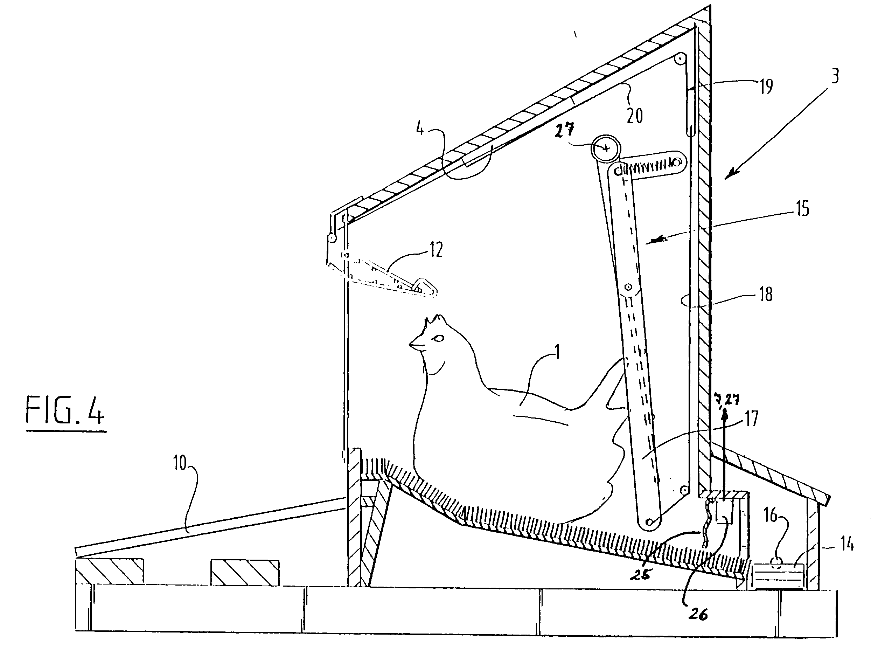

In der Fig. 4 dargestellte Situation ist das Austreibsystem 15 gegenüber seiner Ruhestellung nach Fig. 3 geringfügig um seinen Schwenkpunkt verdreht. Ein Arm 17, mit dem das Austreibsystem 15 ausgestattet ist, ist mit seinem zum Nestboden 13 hin orientierten Ende mit einem Seilzug 18 verbunden, der schon durch eine gering Schwenkbewegung des Armes 17 gespannt wird. Über eine in der Zeichnung nur symbolisch gezeigte, flaschenzugähnliche Kraftumlenkeinrichtung 19 wird die geringe Zugbewegung des Seilzuges 18 in eine verstärkte Längsbewegung eines Seiles 20 umgesetzt. Diese Wegübertragung ist so bemessen, daß schon die Auswirkung einer kleinen Schwenkbewegung des Armes 17 auf den Seilzug 18 über das Seil 20 zu einem Öffnen des Verschlußelementes 12 und seiner arretierten Stellung am so wieder geöffneten Nest-Zugang führt.

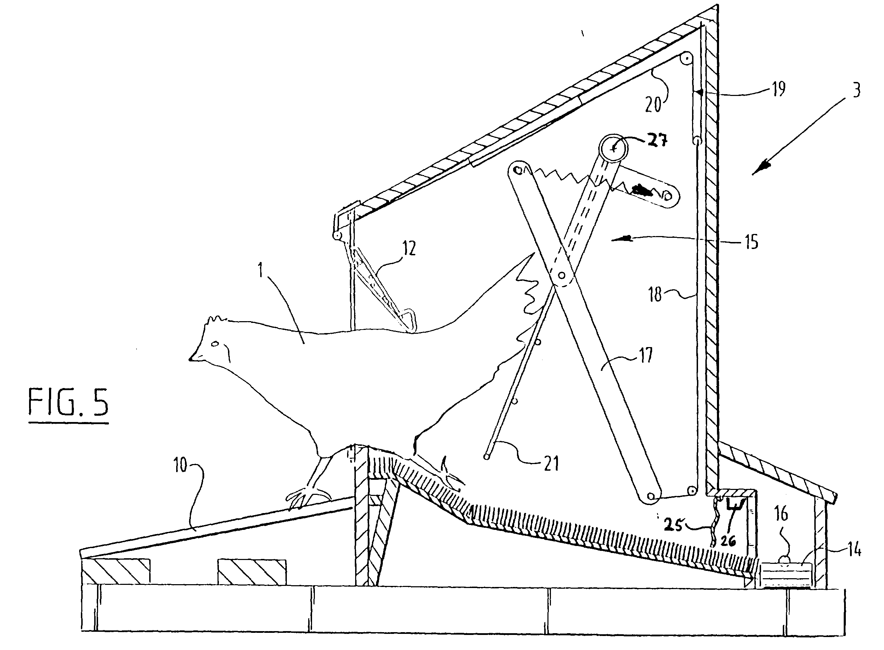

Bei nun wieder geöffnetem Nest 3 wird infolge weiterer Antriebsbewegung des Schwenkmotors 27 auf das dargestellte Hebelsystem 15 von einem an den nun elastisch zurückgehaltenen Hebel 17 angelenkten, gitterförmigen Schieber 21 die Henne 1 sanft aus dem Nest 3 herausgedrängt, indem das Austreibsystem 15 weiter nach vorne ausschwenkt. Beim dargestellten Prinzipbeispiel für die Realisierung eines solchen Austreibsystemes 15 ist das dein Anschluß des Seilzuges 18 gegenüberliegende obere Ende des als zweiarmiger Hebel gelagerten Armes 17 wie im einzelnen in Fig. 5 dargestellt von, übrigen Austreibsystem 15 abgehoben, weil das erwähnte untere Ende des Armes 17 wegen seines Anschlusses an den Seilzug 18, dessen Bewegungsmöglichkeit durch die Öffnungsbewegung des Verschlußelementes 12 begrenzt ist, nicht weiter ausgelenkt werden kann.

Im Zuge einer danach - ebenfalls motorisch, oder aber wie skizziert infolge Einwirkung aus einem zuvor aufgeladenen Kraftspeicher wie einer gespannten Feder - hervorgerufenen Rückbewegung des Austreibsystemes 15 legt sich der Arm 17 wieder an das übrige Gestänge an und nimmt dadurch wieder die Stellung gemäß Fig. 4 ein, ehe die Ruhestellung nach Fig. 3 erreicht ist. Die elastische Verbindung des oberen Endes des Armes 17 mit dem Austreibsystem 15 kann beispielsweise wie dargestellt mittels einer Zugfeder erfolgen, wodurch gewissermaßen eine unter Federdruck wirkende Kupplung realisiert ist, die bei zu weitem Ausschwenken den Arm 17 vom übrigen Gestänge elastisch entkuppelt. Es sind hier aber auch andere lösbare Kupplungsmöglichkeiten denkbar, wie etwa eine Magnetkupplung.

Fig. 6 zeigt in schematisierter Rückansicht eine Anzahl von nebeneinander angeordneten Legenestern 3, längs derer dahinter das Transportband 14 verläuft. Das endlose Transportband 14 ist intermittierend um zwei Stützräder 22, 23 rechnergesteuert so antreibbar, nämlich in der in Fig. 6 eingetragenen Pfeilrichtung P2, daß eindeutig zugeordnet ist, wenn eine bestimmte Mulde 24 von einem bestimmten Nest 3 kommend die Markierstation mit dem Tintenstrahl-Drucker 9 gerade erreicht hat.

Ein Ei 16, dessen Legehenne 1 ja bekannt ist, weil es aus dem Nest 3 ausgegeben wurde, in dem die Antenne 4 eine Henne 1 über ihren Transponder 2 identifiziert hatte, ist also in eine bestimmte der auf dem Transportband 14 nacheinander ausgebildeten Mulden 24 hineingefallen. Die intermittierende Antriebsbewegung des Stützrades 23 wird über einen der Rechner 7 oder 8 gesteuert. Dadurch ist definiert, aus welchem der Nester 3 das Ei 16 stammt, das nach einem definierten Transportweg zu einem bestimmten Zeitpunkt beim Drucker 9 der ebenfalls rechnergesteuerten Markierstation erscheint. So können nacheinander einlaufende Eier 16 vom Drucker 9 vollautomatisch mit Informationen versehen werden, die zuverlässig davon abhängig sind, welche Henne 1 das Ei 16 in eines der Nester 3 gelegt hatte.

## Patentansprüche

1. Verfahren zur Zuordnung zwischen einer Legehenne und ihr in ein Fallen-Nest gelegtes Ei,
dadurch gekennzeichnet,
daß das Ei nach Maßgabe einer Identinformation aus einem Transponder an der im Legenest sich aufhaltenden Legehenne individualisiert und bedruckt wird, gegebenenfalls verknüpft mit anderweitig abgespeicherten weiteren für einen Zuchterfolg relevanten Daten.

2. Vorrichtung zur Zuordnung zwischen einer Legehenne (1) und ihr in ein Fallen-Legenest (3) gelegtes Ei (16),
dadurch gekennzeichnet,
daß am Legenest (3) ein Übergabebereich für das Ei (16) zu einer hinter dem Nest (3) wirkenden rechnergesteuerten Transporteinrichtung vorgesehen ist, mit der das Ei (16) zu einer rechnergesteuerten Markierstation verbringbar ist, in der eine Identinformation bezüglich der Henne (1) und gegebenenfalls zugeordnete weitere Informationen auf das Ei (16) aufgebracht werden, wobei die Identinformation über die Henne (1) mittels einer Antenne (4) am oder im Legenest (3) aus einem Transponder (2) auslesbar ist, mit der die Henne (1) ausgestattet ist.

3. Vorrichtung nach Anspruch 2,
dadurch gekennzeichnet,
daß das Legenest (3) zutrittseitig verschließbar ist, indem eine Legehenne (1) das Nest (3) betreten hat.

4. Vorrichtung nach Anspruch 2 oder 3,
dadurch gekennzeichnet,
daß das Nest (3) mit einem Austreibsystem (15) für die Henne (1) und zugleich zum Wieder-Öffnen des Nest-Zuganges ausgestattet ist.

5. Vorrichtung nach einem der Ansprüche 2 ff,
dadurch gekennzeichnet,
daß das Nest (3) mit einem Detektor (26) ausgestattet ist, der auf das Erscheinen eines ins Nest (3) gelegten Eies (16) anspricht.

6. Vorrichtung nach einem der Ansprüche 2 ff,
dadurch gekennzeichnet,
daß ein auf das Vorhandensein eines Eies (16) ansprechender Detektor (26) ein Austreibsystem (15) für die Henne (1) aktiviert.

7. Vorrichtung nach einem der Ansprüche 2 ff,
dadurch gekennzeichnet,
daß das Nest (3) mit einem von einem Eier-Detektor (26) gestarteten, motorbetriebenen Austreibsystem (15) zum Wieder-Öffnen des Nestzuganges und zum Herausschieben der Henne (1) aus dem Nest (3) ausgestattet ist.

8. Vorrichtung nach einem der Ansprüche 2 ff,
dadurch gekennzeichnet,
daß das Nest (3) mit einem Austreibsystem (15) ausgestattet ist, das zugleich mit dem Wieder-Öffnen des Nestes (3) auf die darin noch befindliche Henne (1) einwirkt.

9. Vorrichtung nach einem der Ansprüche 2 ff,
dadurch gekennzeichnet,
daß für den Transport eines Eies (16) vom Nest (3) zu einem Drucker (9) ein endloses Transportband (14) vorgesehen ist, auf dem voneinander distanzierte Mulden (24) sind, die vorzugsweise in Relation zu regelmäßig nebeneinander distanziert angeordneten Legenestern (3) so voneinander distanziert sind, daß in jede der Mulden (24) allenfalls ein Ei (16) aus einem bestimmten Nest (3) hineingelangen kann.

10. Vorrichtung nach einem der Ansprüche 2 ff,
dadurch gekennzeichnet,
daß für die Überbringung eines Eies (16) aus einem bestimmten Nest (3) an einen zentralen Drucker (9) ein Transportband (14) intermittierend antreibbar ist.

11. Vorrichtung nach einem der Ansprüche 2 ff,
dadurch gekennzeichnet,
daß zur Identifikation der Henne (1) und damit des von ihr gelegten Eies (16) wenigstens ein Empfänger in Form einer Antenne (4) in oder an dem Nest (3) installiert ist, die mit einem Rechner (7, 8) zur Datenverarbeitung und Steuerung einer Transporteinrichtung sowie einer Markierstation verbunden ist.

12. Vorrichtung nach einem der Ansprüche 2 ff,
dadurch gekennzeichnet,
daß von einem Rechner (7, 8) ein Drucker (9) zur Übertragung von Daten auf das Ei (16) angesteuert ist.

13. Vorrichtung nach einem der Ansprüche 2 ff,
dadurch gekennzeichnet,
daß ein Drucker (9) rechnergesteuert auch von der Legehenne (1) abhängig abgespeicherte Daten auf das Ei (16) überträgt.

14. Vorrichtung nach einem der Ansprüche 2 ff,
dadurch gekennzeichnet,
daß am Ende des Transportweges eines Eier-Transportbandes (14) ein Drucker (9) installiert ist.
